# EUROPÄISCHE PATENTSCHRIFT

(11) **EP 1 593 473 B1**
(45) Veröffentlichungstag und Bekanntmachung des Hinweises auf die Patenterteilung: **03.12.2008**
(21) Anmeldenummer: 05008642.0
(22) Anmeldetag: 20.04.2005
(51) Int. Cl.: B29B 7/76, B01F 5/02

(54) **Mehrkomponenten-Mischkopf**
Multicomponent mixerhead
Tête de mélange multicomposantes

(30) Priorität: 03.05.2004 DE 102004021563
(43) Veröffentlichungstag der Anmeldung: 09.11.2005
(73) Patentinhaber: Hennecke GmbH, 51379 Leverkusen (DE)
(72) Erfinder: Wirth, Jürgen, 51147 Köln (DE); Raffel, Reiner, 53721 Siegburg (DE)
(74) Vertreter: Gosdin, Michael

(56) Entgegenhaltungen:
- EP-A- 0 879 685
- DE-U1- 9 315 493
- GB-A- 2 129 324

## Beschreibung

Die Erfindung betrifft einen Mischkopf zur Vermischung von mindestens einer Polyolkomponente und mindestens einer Isocyanatkomponente und gegebenenfalls von Additiven zu einem Polyurethan-Reaktionsgemisch.

Bei der Herstellung von Polyurethanen-Formkörpern werden üblicherweise mehrere Komponenten (Isocyanat, Polyol, Treibmittel, Additive, ...) schussweise in eine Mischkammer dosiert, dort vermischt und in eine Form geleitet. Für diese Mischaufgabe werden Mehrkomponenten-Mischköpfe eingesetzt, die ein gleichzeitiges Vermischen der verschiedenen Komponenten ermöglichen.

Solche Mehrkomponenten-Mischköpfe weisen üblicherweise eine zylindrische Mischkammer auf, welche an einem Ende geschlossen ist und in welche die verschiedenen Komponenten über auf dem Umfang angeordnete Eintrittsdüsen injiziert werden. Dabei sind die Eintrittsdüsen üblicherweise auf einer Kreislinie angeordnet, so dass die in die Mischkammer eintretenden KomponentenStrahlen aufeinandertreffen und dadurch vermischt werden. In Auslaufrichtung der Mischkammer nachgeschaltet ist im allgemeinen ein zylindrischer, an einem Ende geschlossener Auslaufkanal angeordnet, durch den das erzeugte Gemisch aus dem Mischkopf austritt. Üblicherweise sind die Mischkammer und der Auslaufkanal in einem Winkel von 90° gegeneinander angeordnet, damit das Gemisch beim Austritt aus der Mischkammer umgelenkt wird und dabei kinetische Energie abgebaut wird.

Dabei weisen diese Mischköpfe weiterhin üblicherweise einen Steuerschieber auf, der in der Mischkammer in axialer Richtung beweglich angeordnet ist, und der in der zurückgezogenen oder hinteren Position die Eintrittsöffnungen freigibt, so dass die Komponenten aus den Eintrittsdüsen in die Mischkammer austreten und aufeinanderprallen können (Schussposition), und der in der vorgeschobenen oder vorderen Position die Eintrittsdüsen mit in dem Steuerschieber angeordneten Nuten verbindet, durch welche die Komponenten zu den jeweiligen auf der zylindrischen Wandfläche angeordneten Auslässen strömen, durch die sie wieder in ihre Vorlagebehälter zurückgeführt werden können (Rücklaufposition, Rezirkulation).

Die Mischköpfe weisen weiterhin üblicherweise einen Reinigungskolben oder Reinigungsschieber auf, der in dem Auslaufkanal in axialer Richtung beweglich angeordnet ist. Durch den Reinigungskolben können nach Schussende in dem Auslaufkanal verbliebene Reste der Komponenten ausgetragen werden, um ein Zusetzen des Auslaufkanals zu vermeiden.

Da diese Mischköpfe sowohl einen Steuerschieber als auch einen Reinigungsschieber aufweisen, werden diese Mischköpfe auch als Zweischieber-Mischköpfe bezeichnet. Beispiele solcher Mischköpfe sind in DE-A-23 27 269, DE-C-29 07 938, DE-A-30 40 922, DE-U-93 15 493, EP-A-0 879 685 und GB-A-2 129 324 beschrieben.

Gebräuchlich sind bisher Zwei-, Vier- und Sechs-Komponenten-Mischköpfe, wobei jeder Komponente eine eigene Nut auf dem Steuerschieber zugeordnet ist.

Dabei gilt es insbesondere bei Sechs-Komponenten-Mischköpfen folgendes Problem zu lösen: Der Durchmesser des Auslaufkanals ist mehr oder weniger vorgegeben, da eine mittlere Auslaufgeschwindigkeit von ca. 0,5 bis 1 m/s je nach Gemischviskosität nicht unterschritten werden darf. Ansonsten kann das ausströmende Reaktionsgemisch den Querschnitt des Auslaufkanals nicht völlig ausfüllen, was zu störenden Turbulenzen und zu Lufteinschlag in das Gemisch führt.

Bei den bekannten Bauarten der Mehrkomponenten-Mischköpfe mit zwei Schiebern ist der Durchmesser der Mischkammer stets kleiner als der Durchmesser des Auslaufkanals, da bisher angenommen wurde, dass in der Hochdruckvermischung die Mischkammer besonders klein sein muss, da durch einen kleinen Abstand zwischen den Öffnungen der Eintrittsdüsen für die verschiedenen Komponenten der Atomisierungseffekt der Komponentenstrahlen und daher auch das Ausmaß der Vermischung verbessert werden (DE-C- 29 07 938).

Durch die aus dem Stand der Technik bekannten sehr kleinen Durchmesser der Mischkammer entsteht aber insbesondere bei kleinen Austragsmengen ein konstruktives Problem: auf dem begrenzten Umfang des Steuerschiebers müssen dann beispielsweise sechs Steuernuten parallel zueinander räumlich angeordnet werden, wobei zwischen den Steuernuten auch noch Raum für die Abdichtung vorhanden sein muss.

Als Konsequenz aus diesem Problem ergibt sich bei den bekannten Bauformen, dass die Nuten zu schmal werden und der Druckverlust während der Rezirkulation zu hoch wird. Der Ausweg aus diesem Dilemma ist bisher, die Komponenten während der Rezirkulation nur im Teilstrom durch die Nuten strömen zu lassen und den Hauptanteil der Komponentenströme über Bypass-Leitungen am Mischkopf vorbei zu führen, die nach Umsteuerung des Steuerschiebers in Schussposition ebenfalls umgelenkt werden müssen. Dies ist aber eine komplizierte und unverhältnismäßig aufwendige Notlösung.

Ein weiteres Problem der bekannten Bauformen liegt in einer grundsätzlichen Problematik der Hochdruckvermischung, insbesondere für kleine Ausstoßmengen begründet:

ausgehend von laminaren Düsenstrahlen muss ohne Hilfe zusätzlicher Einbauten, wie sie etwa bei einem statischen Mischer installiert sind, in kürzester Zeit eine gute und möglichst vollständige Vermischung der Komponenten erzielt werden. Bei idealisierten, ungestörten und damit stationären Strömungsverhältnissen in der Mischkammer ist dies im Prinzip nur schwer möglich, da diffusiver Stofftransport aufgrund der kleinen Verweilzeiten keinen nennenswerten Beitrag zur Vermischung leisten kann.

Es bildet sich in einer solchen Strömung abhängig von den Strahlimpulsen der Komponentenstrahlen ein theoretischer Stoßpunkt aus, um den sich quellförmig ein Druckgradientenfeld ausbildet. Dieses sorgt dafür, dass sich die einzelnen Stromfäden entsprechend ihrer verbliebenen Geschwindigkeit diesem Stoßpunkt mehr oder weniger weit annähern, wobei die dynamische Bewegungsenergie dann im wesentlichen in Druckenergie umgewandelt wird und daneben teilweise aufgrund der Zähigkeitskräfte in Wärme dissipiert wird. Diese Druckenergie wird dann wieder in Bewegungsenergie in Richtung des kleineren Druckes umgewandelt. Dabei bildet sich aber im Falle einer idealisierten störungsfreien Strömung eine mehr oder weniger stabile Grenzfläche zwischen den Komponenten aus, die praktisch nicht durchbrochen wird. Somit bleiben die Komponenten im wesentlichen unvermischt.

Die Aufgabe der vorliegenden Erfindung besteht daher darin, einen Mischkopf zur gleichzeitigen Vermischung mehrerer Komponenten zur Verfügung zu stellen, mit dem ein laminar fließender, blasenfreier Gemischauslauf erzielt werden kann und der gleichzeitig mit niedrigen Druckverlusten in den Nuten des Steuerschiebers für die ungeteilten Komponentenströme in der Rezirkulationsphase betrieben werden kann.

Die Erfindung betrifft einen Mischkopf zur Vermischung von mindestens einer Polyolkomponente und mindestens einer Isocyanatkomponente und gegebenenfalls von Additiven zu einem Polyurethan-Reaktionsgemisch, enthaltend
a) eine zylindrische Mischkammer, auf der über den Umfang verteilt mindestens zwei Eintrittsdüsen für die jeweiligen Komponenten angeordnet sind,
b) einen Steuerschieber, der in der Mischkammer axial zwischen einer vorderen Position und einer hinteren Position beweglich angeordnet ist, und auf dessen Umfang Nuten angeordnet sind, wobei in der vorderen Position des Steuerschiebers die Komponenten durch die Eintrittsdüsen in die Nuten eintreten können, durch die Nuten strömen können und durch Auslässe die Nuten wieder verlassen können, und wobei in der hinteren Position des Steuerschiebers die Komponenten durch die Eintrittsdüsen in die Mischkammer eintreten können,
c) einen Auslaufkanal, der der Mischkammer in Auslaufrichtung des Polyurethan-Reaktionsgemisches nachgeschaltet ist und der in einem Winkel von 40 bis 140° gegen die Mischkammer angeordnet ist, und
d) einen Reinigungsschieber, der in dem Auslaufkanal in axialer Richtung beweglich angeordnet ist,
dadurch gekennzeichnet, dass der Durchmesser D der Mischkammer um den Faktor 1,1 bis 5, vorzugsweise um den Faktor 1,2 bis 3, besonders bevorzugt um den Faktor 1,5 bis 2 größer ist als die Breite B der projizierten Fläche der Austrittsöffnung der Mischkammer in den Auslaufkanal.

Der Durchmesser des Auslaufkanals ist dabei mehr oder weniger vorgegeben, da eine mittlere Auslaufgeschwindigkeit von ca. 0,5 bis 1 m/s je nach Gemischviskosität nicht unterschritten werden darf.

Der Durchmesser D des Steuerschiebers, der in etwa dem Durchmesser der Mischkammer entspricht, kann in dem erfindungsgemäßen Mischkopf so groß gewählt werden, wie es die Anzahl und Größe der Steuernuten erforderlich macht. Der Durchmesser des Auslaufkanals wiederum ist an den Austragsmengenbereich angepasst, für den der Mischkopf ausgelegt ist. Das bedeutet aber, dass der Durchmesser D der Mischkammer größer ist als die Breite B der projizierten Fläche der Austrittsöffnung aus der Mischkammer in den Auslaufkanal.

Durch die erfindungsgemäße Dimensionierung der Mischkammer und des Auslaufkanals wird erreicht, dass die Vermischung der Komponenten insbesondere bei niedrigen Reynoldszahlen der Komponentenströmung (Re < 200 der Komponentenströmung in den Eintrittsdüsen) stark verbessert werden kann. Denn bei kleinen Austragsmengen und bei hohen Viskositäten sind den technisch realisierbaren Reynoldszahlen enge Grenzen gesetzt, da die Strömungsgeschwindigkeiten der Komponenten in den Eintrittsdüsen nicht beliebig erhöht werden können. Dies liegt daran, dass einerseits die realisierbaren Drücke (Druckfestigkeit der eingesetzten Maschinenteile, Dosiergenauigkeit der eingesetzten Pumpen) nach oben begrenzt sind, und dass andererseits die Düsendurchmesser (fertigungstechnische Gründe, Filterproblematik) nicht beliebig klein gewählt werden können.

Abhängig von der Mischkammerdimensionierung wird die Strömung oberhalb bestimmter Reynoldszahlen instationär. Diese Grenzen lassen sich durch die erfindungsgemäße Dimensionierung der Mischkammer und des Auslaufkanals nach unten verschieben. Bei instationären Strömungsverhältnissen ist die Vermischung der Komponenten aber wesentlich besser als bei stationären Verhältnissen.

Bei einer im wesentlichen stationären Strömung findet nur eine stark eingeschränkte Vermischung der Komponenten statt, da die in der Regel laminaren Düsenstrahlen zwar mit hoher Geschwindigkeit aufeinandertreffen, sich jedoch im wesentlichen aufgrund ihrer Impulskräfte nur gegenseitig umlenken, ohne wirklich ineinander einzudringen. Es bildet sich ein stationärer Stoßpunkt aus, an dem die Strahlen aufeinandertreffen. Um diesem Stoßpunkt herrscht ein aufgrund der stationären Strömungsverhältnisse zeitlich konstanter, erhöhter Druck, welcher dazu führt, dass die Strahlen zur Seite umgelenkt werden.

Demgegenüber kommt es bei einer instationären Strömung nicht zur Ausbildung eines stabilen Stoßpunktes der Strahlen, sondern die Strahlen können aufgrund der instationären Strömungsverhältnisse und Druckgradienten wesentlich besser ineinander eindringen. Dabei entstehen dann Wirbelströmungen, die für eine gute Vermischung der Komponenten sorgen.

Es wurde gefunden, dass der Umschlag von stationären Strömungsverhältnissen in instationäre Strömungsverhältnisse neben der Reynoldszahl insbesondere auch wesentlich von der Mischkammergeometrie abhängt. Ein größerer Durchmesser D der Mischkammer im Verhältnis zum Durchmesser d der Eintrittsdüsen führt dazu, dass dieser Umschlagpunkt bereits bei kleineren Reynoldszahlen bzw. Strömungsgeschwindigkeiten der Komponenten stattfindet, wodurch die Vermischung wesentlich verbessert wird. Dabei ist allerdings zu berücksichtigen, dass der Durchmesser d der Eintrittsdüsen im Prinzip keine frei wählbare Größe ist, sondern in der Regel so gewählt wird, dass je nach Düsenform durch den Lochquerschnitt selbst oder bei Zapfendüsen bei geeigneter Düsenzapfenanstellung die notwendige bzw. maximal realisierbare Düsengeschwindigkeit erzielt wird. Die Wahl des Durchmessers der Eintrittsdüsen unterliegt dabei wie oben bereits ausgeführt gewissen unteren Grenzen.

Daher entspricht die Anforderung eines großen Verhältnisses des Durchmessers der Mischkammer zum Durchmesser der Eintrittsdüsen im Prinzip der Anforderung eines großen Durchmessers der Mischkammer.

Gleichzeitig darf die Mischkammer jedoch nicht beliebig groß ausgeführt werden, da ansonsten die Impulskräfte der Strahlen insbesondere bei höheren Viskositäten bereits vor dem Aufeinandertreffen in der Stoßebene bereits so stark abgebaut sind, dass die Strahlen auch bei instationären Verhältnissen nicht mehr genügend vermischt werden können.

Daher liegt bevorzugt das Verhältnis des Durchmessers d der größten der Eintrittsdüsen zum Durchmesser D der Mischkammer zwischen 0,01 und 0,2, besonders bevorzugt zwischen 0,01 und 0,15 und ganz besonders bevorzugt zwischen 0,015 und 0,1.

Durch die erfindungsgemäße Dimensionierung der Mischkammer und des Auslaufkanals wird ein weiteres Problem gelöst. Für eine einwandfreie Vermischung ist nämlich eine Kammerung der Mischkammer erforderlich, damit nicht unvermischte Teilströme vorzeitig entweichen können.

Diese Kammerung erfolgt dabei dadurch, dass der Reinigungsschieber während des Schussbetriebs die Austrittsöffnung aus der Mischkammer in den Auslaufkanal teilweise verdeckt. Wird andererseits der Auslauf aus der Mischkammer zu klein, weil der Reinigungsschieber einen zu großen Teil der Austrittsfläche aus der Mischkammer in den Auslaufkanal verdeckt, so wird die Austrittsgeschwindigkeit des Gemisches zu hoch und das Gemisch wird unruhig und spritzend ausgetragen.

Da durch die hohen Impulskräfte der Düsenstrahlen die Mischzonen im wesentlichen im Bereich der Wände der Mischkammer liegen, ist der Auslauf aus der Mischkammer in der Nähe der Mischkammerwand besonders kritisch. Dies gilt vor allem bei Mehrkomponenten-Mischköpfen, bei denen mit stark variierenden Komponentenzuordnungen und damit mit stark variierenden Positionen der Mischzonen zu rechnen ist.

Durch die Dimensionierung der Mischkammer und des Auslaufkanals in dem erfindungsgemäßen Mischkopf wird erreicht, dass der Anteil der Wandfläche der Mischkammer, der direkt in den Auslaufkanal bzw. in die Austrittsöffnung aus der Mischkammer mündet, reduziert wird, da die Mischkammer einen größeren Durchmesser hat als der Auslaufkanal und sich somit eine im wesentlichen rechteckige Form der Projektionsfläche der Austrittsöffnung aus der Mischkammer ergibt.

Zusätzlich begünstigt diese kompaktere Form des Austrittsquerschnitts mit einer im wesentlichen rechteckigen Form gegenüber dem schmaleren kreissegmentförmigen Querschnitt die Rückkopplung von Störgrößen im Auslauf auf die Strömungsverhältnisse in der Mischkammer, was wiederum den Umschlag einer im wesentlichen stationären Strömung zu instationären Strömungsverhältnissen in der Mischkammer begünstigt.

Zusammengefasst vereinigt die erfindungsgemäße Ausführung der Mischkammer folgende wichtige Vorteile:
- Größere Mischkammerdurchmesser bieten konstruktive Vorteile bezüglich der Gestaltung der Rezirkulationsnuten und der Abdichtung zwischen den Rezirkulationsnuten
- größere Mischkammerdurchmesser begünstigen den Umschlag einer im wesentlichen stationären Strömung in eine im wesentlichen instationäre Strömung, wodurch die Mischwirkung erheblich verbessert wird.
- ruhigerer Austrag des Gemisches in den Auslauf bei ebenso effizienter Kammerung der Mischkammer durch geeignetere Lage des Austrittsquerschnitts aus der Mischkammer in Bezug zu den Strömungsverhältnissen in der Mischkammer.
- bessere Rückkopplung durch Störgrößen im Auslauf des Mischkopfes auf Strömungsverhältnisse in der Mischkammer bei ebenso effizienter Kammerung der Mischkammer begünstigt den Umschlag einer im wesentlichen stationären Strömung in eine im wesentlichen instationäre Strömung wodurch die Mischwirkung wesentlich verbessert wird.

In einer bevorzugten Ausführungsform des Mischkopfs beträgt das Verhältnis der Höhe A der rechteckigen Projektionsfläche der Austrittsöffnung aus der Mischkammer in den Auslaufkanal, der nicht von dem Reinigungsschieber verdeckt wird, zu der Breite B der rechteckigen Projektionsfläche der Austrittsöffnung aus der Mischkammer in den Auslaufkanal, A : B 0,05 bis 5, besonders bevorzugt 0,05 bis 1, ganz besonders bevorzugt 0,1 bis 1, insbesondere bevorzugt 0,2 bis 0,5.

In einer weiteren Ausgestaltung dieses Mischkopfs beträgt das Verhältnis der Länge H der Mischkammer in axialer Richtung, die von der Stirnfläche des Steuerschiebers auf der einen Seite und der Austrittsöffnung aus der Mischkammer in den Auslaufkanal auf der anderen Seite begrenzt wird, zum Durchmesser D der Mischkammer, H : D 0,1 bis 1, besonders bevorzugt 0,2 bis 0,8, ganz besonders bevorzugt 0,3 bis 0,6. Durch die Minimierung der Mischkammerhöhe H nämlich wird die Mischzone im wesentlichen auf die Strahlebene der Düsen eingegrenzt und somit werden außerhalb dieser Mischzone liegende Totzonen eliminiert.

Die Erfindung betrifft außerdem ein Verfahren zur Vermischung mindestens einer Polyolkomponente und mindestens einer Isocyanatkomponente und gegebenenfalls von Additiven zu einem Polyurethan-Reaktionsgemisch, bei dem die eingesetzten Komponenten in die Mischkammer des erfindungsgemäßen Mischkopfes dosiert werden, und dort zu einem Polyurethan-Reaktionsgemisch vermischt werden.

Die Erfindung wird im folgenden anhand der Figuren näher erläutert. Es zeigen:

Es zeigen
- Figur 1: einen erfindungsgemäßen Mischkopf,
- Figur 2: einen Schnitt durch den in Figur 1 dargestellten Mischkopf,
- Figur 3: einen Schnitt durch den Auslaufkanal des in Figur 1 und 2 dargestellten Mischkopfs,
- Figur 4: einen Schnitt durch die Mischkammer auf Höhe der Austrittsöffnung der Mischkammer in den Auslaufkanal.

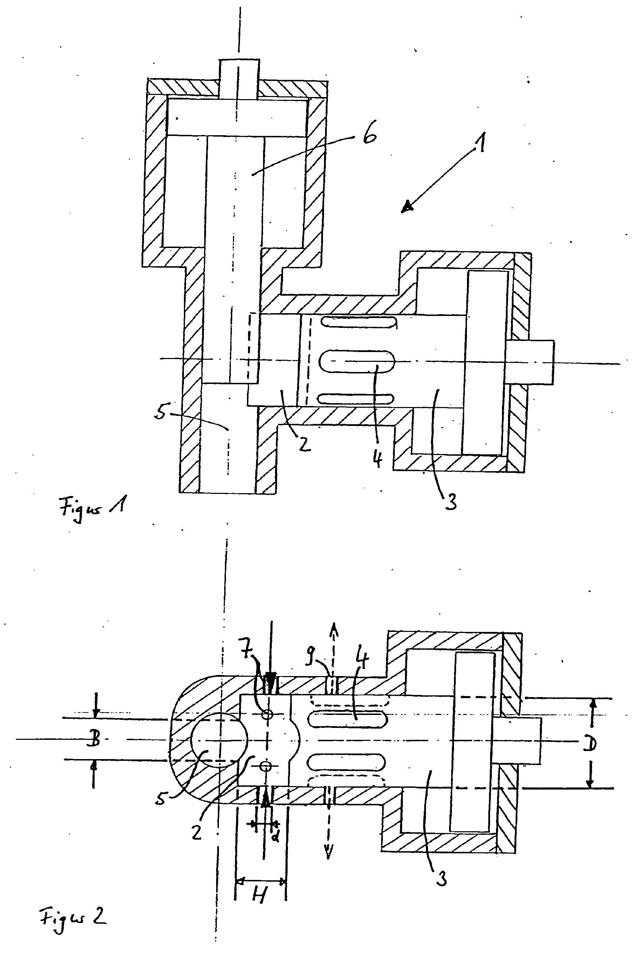

Figur 1 zeigt einen erfindungsgemäßen Mischkopf 1 enthaltend eine zylindrische Mischkammer 2. In der Mischkammer 2 ist ein Steuerschieber 3 angeordnet, der in der Mischkammer axial zwischen einer vorderen Position und einer hinteren Position beweglich angeordnet ist. In Figur 1 befindet sich der Steuerschieber in der hinteren Position (Schussbetrieb). In dem Steuerschieber 3 sind Nuten (Steuemuten) 4 angeordnet, durch welche die Komponenten während der Rezirkulation strömen können. Der Mischkopf 1 weist ferner einen Auslaufkanal 5 mit einem darin axial beweglich angeordneten Reinigungsschieber 6 auf. Dabei ist der Auslaufkanal 5 im rechten Winkel zu der Mischkammer 2 angeordnet. Das aus der Mischkammer 2 austretende Reaktionsgemisch durchströmt nach der Vermischung den Auslaufkanal 5 und tritt dann beruhigt in die Form ein.

Figur 2 zeigt einen Schnitt durch den in Figur 1 dargestellten Mischkopf. Dabei wird deutlich, dass der Durchmesser D der Mischkammer 2 deutlich größer ist als die Breite B der projizierten Fläche der Austrittsöffnung aus der Mischkammer 2 in den Auslaufkanal 5. Die projizierte Fläche ist dabei als die ebene Fläche zu verstehen, die von den Seiten der Austrittsöffnung begrenzt wird, die in axialer Richtung des Auslaufkanals ausgerichtet sind. In die Mischkammer 2 münden die Eintrittsdüsen 7, die einen Durchmesser d aufweisen und die gleichmäßig auf dem Umfang der Mischkammer in Form einer Kreislinie verteilt sind. Die mit durchgezogenen Linien bzw. gestrichelten Linien gezeichneten Pfeile in Figur 2 deuten den Eintritt der Komponenten durch die Eintrittsdüsen 7 in die Mischkammer bzw. den bei der Rezirkulation (der Steuerschieber befindet sich in Figur 2 in Schussbetrieb) möglichen Austritt der Komponenten durch auf der zylindrischen Wandfläche angeordneten Auslässe 9 an. Die Länge H der Mischkammer 2 in axialer Richtung wird von der Stirnfläche des Steuerschiebers 3 auf der einen Seite und von der Austrittsöffnung aus der Mischkammer 2 in den Auslaufkanal 5 auf der anderen Seite begrenzt.

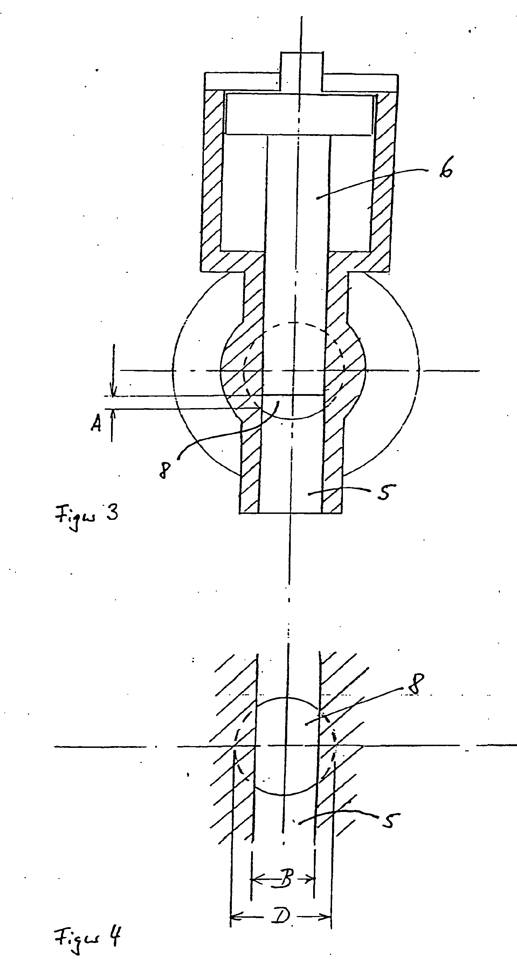

Figur 3 zeigt einen Schnitt durch den Auslaufkanal 5 des in Figur 1 und 2 dargestellten Mischkopfs. Der Reinigungsschieber 6 ist dabei axial verschiebbar in dem Auslaufkanal 5 angeordnet und verdeckt einen Teil der Austrittsöffnung 8 aus der Mischkammer 2. Dabei bedeutet die Höhe A den Teil der gesamten Seitenlänge der Austrittsöffnung 8 aus der Mischkammer 2 bzw. seiner rechteckigen Projektionsfläche, der nicht von dem Reinigungsschieber 6 verdeckt wird. Dabei bezieht sich die Seitenlänge auf die in axialer Richtung des Auslaufkanals 5 ausgerichteten Seiten der Austrittsöffnung 8.

Figur 4 zeigt einen Schnitt durch die Mischkammer 2 auf Höhe der Austrittsöffnung 8 der Mischkammer in den Auslaufkanal 5. Dabei bedeutet analog zu den Bezeichnungen in Figur 2 der Durchmesser D den Durchmesser der Mischkammer und die Breite B die Breite der projizierten Fläche der Austrittsöffnung 8 aus der Mischkammer in den Auslaufkanal 5.

## Patentansprüche

1. Mischkopf (1) zur Vermischung von mindestens einer Polyolkomponente und mindestens einer Isocyanatkomponente und gegebenenfalls von Additiven zu einem Polyurethan-Reaktionsgemisch, enthaltend
a) eine zylindrische Mischkammer (2), auf der über den Umfang verteilt mindestens zwei Eintrittsdüsen (7) für die jeweiligen Komponenten angeordnet sind,
b) einen Steuerschieber (3), der in der Mischkammer (2) axial zwischen einer vorderen Position und einer hinteren Position beweglich angeordnet ist, und auf dessen Umfang Nuten angeordnet sind, wobei in der vorderen Position des Steuerschiebers (3) die Komponenten durch die Eintrittsdüsen (7) in die Nuten (4) eintreten können, durch die Nuten (4) strömen können und durch Auslässe (9) die Nuten (4) wieder verlassen können, und wobei in der hinteren Position des Steuerschiebers (3) die Komponenten durch die Eintrittsdüsen (7) in die Mischkammer (2) eintreten können,
c) einen Auslaufkanal (5), der der Mischkammer (2) in Auslaufrichtung des Polyurethan-Reaktionsgemisches nachgeschaltet ist und der in einem Winkel von 40 bis 140° gegen die Mischkammer (2) angeordnet ist, und
d) einen Reinigungsschieber (6), der in dem Auslaufkanal (5) in axialer Richtung beweglich angeordnet ist,
**dadurch gekennzeichnet, dass** der Durchmesser D der Mischkammer (2) um den Faktor 1,1 bis 5 größer ist als die Breite B der projizierten Fläche der Austrittsöffnung (8) der Mischkammer (2) in den Auslaufkanal (5).

2. Mischkopf nach Anspruch 1, **dadurch gekennzeichnet, dass** der Durchmesser D der Mischkammer (2) um den Faktor 1,2 bis 3 größer ist als die Breite B der projizierten Fläche der Austrittsöffnung (8) der Mischkammer (2) in den Auslaufkanal (5).

3. Mischkopf nach Anspruch 1, **dadurch gekennzeichnet, dass** der Durchmesser D der Mischkammer (2) um den Faktor 1,5 bis 2 größer ist als die Breite B der projizierten Fläche der Austrittsöffnung (8) der Mischkammer (2) in den Auslaufkanal (5).

4. Mischkopf nach einem der Ansprüche 1 bis 3, **dadurch gekennzeichnet, dass** die projizierte Fläche der Austrittsöffnung (8) der Mischkammer (2) in den Auslaufkanal (5) im wesentlichen rechteckig ist.

5. Mischkopf nach Anspruch 4, **dadurch gekennzeichnet, dass** das Verhältnis der Höhe A der rechteckigen Projektionsfläche der Austrittsöffnung aus der Mischkammer in den Auslaufkanal, der nicht von dem Reinigungsschieber verdeckt wird, zu der Breite B der rechteckigen Projektionsfläche der Austrittsöffnung aus der Mischkammer in den Auslaufkanal, A : B 0,05 bis 5, besonders bevorzugt 0,1 bis 1, ganz besonders bevorzugt 0,2 bis 0,5 beträgt.

6. Mischkopf nach einem der Ansprüche 1 bis 5, bei dem das Verhältnis der Länge H der Mischkammer in axialer Richtung, die von der Stirnfläche des Steuerschiebers auf der einen Seite und der Austrittsöffnung aus der Mischkammer in den Auslaufkanal begrenzt wird, zum Durchmesser D der Mischkammer (2), H : D 0,1 bis 1, besonders bevorzugt 0,2 bis 0,8, ganz besonders bevorzugt 0,3 bis 0,6 beträgt.

7. Mischkopf nach einem der Ansprüche 1 bis 6, **dadurch gekennzeichnet, dass** das Verhältnis des Durchmessers d der größten der Eintrittsdüsen (7) zum Durchmesser D der Mischkammer (2) im Bereich zwischen 0,01 und 0,2 und vorzugsweise im Bereich zwischen 0,01 und 0,15 liegt und besonders bevorzugt im Bereich zwischen 0,015 und 0,1 liegt.

8. Verfahren zur Vermischung mindestens einer Polyolkomponente und mindestens einer Isocyanatkomponente und gegebenenfalls von Additiven zu einem Polyurethan-Reaktionsgemisch, bei dem die Komponenten in einen Mischkopf gemäß einem der Ansprüche 1 bis 7 dosiert werden und dort zu einem Polyurethan-Reaktionsgemisch vermischt werden.

## Claims

1. Mixing head (1) for mixing at least one polyol component and at least one isocyanate component and where appropriate additives, to form a polyurethane reaction mixture, containing
a) a cylindrical mixing chamber (2) on which at least two inlet nozzles (7) for the respective components are arranged, distributed over the periphery,
b) a control slide (3) which is arranged in the mixing chamber (2) movably in an axial direction between a front position and a rear position, and on the periphery whereof grooves are arranged, with the components being able when the control slide (3) is in the front position to enter the grooves (4) through the inlet nozzles (7), flow through the grooves (4) and leave the grooves (4) again through outlets (9), and wherein the components being able when the control slide (3) is in the rear position to enter the mixing chamber (2) through the inlet nozzles (7),
c) an outlet channel (5) which is connected downstream of the mixing chamber (2) in the outgoing direction of the polyurethane reaction mixture and which is arranged at an angle of between 40 and 140° with respect to the mixing chamber (2), and
d) a cleaning slide (6) which is arranged in the outlet channel (5) movably in the axial direction,
**characterized in that**
the diameter D of the mixing chamber (2) is larger by a factor of 1.1 to 5 than the breadth B of the projected surface of the outlet opening (8) of the mixing chamber (2) into the outlet channel (5).

2. Mixing head according to claim 1, **characterized in that** the diameter D of the mixing chamber (2) is larger by a factor of 1.2 to 3 than the breadth B of the projected surface of the outlet opening (8) of the mixing chamber (2) into the outlet channel (5).

3. Mixing chamber according to claim 1, **characterized in that** the diameter D of the mixing chamber (2) is larger by a factor of 1.5 to 2 than the breadth B of the projected surface of the outlet opening (8) of the mixing chamber (2) into the outlet channel (5).

4. Mixing head according to one of claims 1 to 3, **characterized in that** the projected surface of the outlet opening (8) of the mixing chamber (2) into the outlet channel (5) is substantially rectangular.

5. Mixing head according to claim 4, **characterized in that** the ratio between the height A of the rectangular projected surface of the outlet opening of the mixing chamber into the outlet channel which is not covered by the cleaning slide and the breadth B of the rectangular projected surface of the outlet opening of the mixing chamber into the outlet channel A : B is 0.05 to 5, particularly preferably 0.1 to 1, most particularly preferably 0.2 to 0.5.

6. Mixing head according to one of claims 1 to 5, in which the ratio between the length H of the mixing chamber in the axial direction, limited by the end face of the control slide on the one side and by the outlet opening of the mixing chamber into the outlet channel, and the diameter D of the mixing chamber (2) H : D is 0.1 to 1, particularly preferably 0.2 to 0.8, most particularly preferably 0.3 to 0.6.

7. Mixing head according to one of claims 1 to 6, **characterized in that** the ratio between the diameter d of the largest of the inlet nozzles (7) and the diameter D of the mixing chamber (2) lies in the range between 0.01 and 0.2, preferably in the range between 0.01 and 0.15, and particularly preferably in the range between 0.015 and 0.1.

8. Method of mixing at least one polyol component and at least one isocyanate component and where appropriate additives, to form a polyurethane reaction mixture, in which the components are metered into a mixing head according to one of claims 1 to 7 and are mixed there to form a polyurethane reaction mixture.

## Revendications

1. Tête de mélange (1) pour le mélange d'au moins un composant polyol et d'au moins un composant isocyanate et éventuellement d'additifs, pour donner un mélange réactionnel de polyuréthannes, contenant :
a) une chambre de mélange cylindrique (2) sur laquelle sont disposées au moins deux buses d'entrée (7) réparties sur la périphérie pour les composants respectifs,
b) un tiroir de commande (3) qui est disposé dans la chambre de mélange (2) de manière déplaçable axialement entre une position avant et une position arrière, et sur la périphérie duquel sont disposées des rainures, les composants pouvant entrer à travers les buses d'entrée (7) dans les rainures (4) dans la position avant du tiroir de commande (3), pouvant s'écouler à travers les rainures (4) et ressortir à nouveau des rainures (4) par des sorties (9), les composants pouvant entrer à travers les buses d'entrée (7) dans la chambre de mélange (2) dans la position arrière du tiroir de commande (3) ,
c) un canal d'écoulement (5), qui est monté après la chambre de mélange (2) dans la direction d'écoulement du mélange réactionnel de polyuréthanne et qui est disposé suivant un angle de 40 à 140° par rapport à la chambre de mélange, et
d) un tiroir de nettoyage (6), qui est disposé dans le canal d'écoulement (5) de manière déplaçable dans la direction axiale,
**caractérisée en ce que** le diamètre D de la chambre de mélange (2) est supérieur d'un facteur 1,1 à 5 à la largeur B de la surface en projection de l'ouverture de sortie (8) de la chambre de mélange (2) dans le canal d'écoulement (5).

2. Tête de mélange selon la revendication 1, **caractérisée en ce que** le diamètre D de la chambre de mélange (2) est supérieur d'un facteur 1,2 à 3 à la largeur B de la surface en projection de l'ouverture de sortie (8) de la chambre de mélange (2) dans le canal d'écoulement (5).

3. Tête de mélange selon la revendication 1, **caractérisée en ce que** le diamètre D de la chambre de mélange (2) est supérieur d'un facteur 1,5 à 2 à la largeur B de la surface en projection de l'ouverture de sortie (8) de la chambre de mélange (2) dans le canal d'écoulement (5).

4. Tête de mélange selon l'une quelconque des revendications 1 à 3, **caractérisée en ce que** la surface en projection de l'ouverture de sortie (8) de la chambre de mélange (2) dans le canal d'écoulement (5) est sensiblement rectangulaire.

5. Tête de mélange selon la revendication 4, **caractérisée en ce que** le rapport de la hauteur A de la surface en projection rectangulaire de l'ouverture de sortie hors de la chambre de mélange dans le canal d'écoulement, qui n'est pas recouverte par le tiroir de nettoyage, à la largeur B de la surface en projection rectangulaire de l'ouverture de sortie hors de la chambre de mélange dans le canal d'écoulement, A:B, vaut de 0,05 à 5, particulièrement de préférence de 0,1 à 1, tout particulièrement préférablement 0,2 à 0,5.

6. Tête de mélange selon l'une quelconque des revendications 1 à 5, dans laquelle le rapport de la longueur H de la chambre de mélange dans la direction axiale, qui est limitée par la surface frontale du tiroir de commande d'un côté, et par l'ouverture de sortie hors de la chambre de mélange dans le canal d'écoulement, au diamètre D de la chambre de mélange (2), H:D vaut 0,1 à 1, particulièrement préférablement de 0,2 à 0,8, tout particulièrement préférablement de 0,3 à 0,6.

7. Tête de mélange selon l'une quelconque des revendications 1 à 6, **caractérisée en ce que** le rapport du diamètre d de la plus grande des buses d'entrée (7) au diamètre D de la chambre de mélange (2) est de l'ordre de 0,01 à 0,2 et de préférence de l'ordre de 0,01 à 0,15, et est particulièrement préférablement de l'ordre de 0,015 à 0,1.

8. Procédé de mélange d'au moins un composant polyol et d'au moins un composant isocyanate et éventuellement d'additifs pour donner un mélange réactionnel de polyuréthanne, dans lequel les composants sont dosés dans une tête de mélange selon l'une quelconque des revendications 1 à 7 et y sont mélangés pour donner un mélange réactionnel de polyuréthanne.
